# EUROPEAN PATENT SPECIFICATION

(11) **EP 3 418 062 B1**
(45) Date of publication and mention of the grant of the patent: **15.12.2021**
(21) Application number: 18176486.1
(22) Date of filing: 07.06.2018
(51) Int. Cl.: B41J 29/04, B41J 29/06, B41J 29/13, B41J 2/32, B41J 3/36, B41J 3/44, B41J 29/02

(54) **PRINTING APPARATUS**
DRUCKVORRICHTUNG
IMPRIMANTE

(30) Priority: 21.06.2017 JP 2017121112
(43) Date of publication of application: 26.12.2018
(73) Proprietor: Fujitsu Component Limited, Tokyo 140-0002 (JP)
(72) Inventor: OGUCHI, Tatsuya, Shinagawa-ku, Tokyo 140-0002 (JP); WATANABE, Sumio, Shinagawa-ku, Tokyo 140-0002 (JP); MORI, Yukihiro, Shinagawa-ku, Tokyo 140-0002 (JP)
(74) Representative: Haseltine Lake Kempner LLP

(56) References cited:
- AU-A1- 2004 201 738
- JP-A- 2001 253 137
- US-A1- 2007 184 879
- US-B1- 6 270 271

## Description

### BACKGROUND OF THE INVENTION

### 1. Field of the Invention

The present invention relates to printing apparatuses.

### 2. Description of the Related Art

Conventional portable printers have a box shape and are relatively large, and are carried in a bag or the like. Such printers require recording paper and a holder for storing recording paper, which as well are often carried together with printers.

AU2004201738 discloses a stackable printer system.

US6270271 discloses a printer for a portable information processor.

US2007184879 discloses a relay device for a mobile device.

JP2001253137 discloses a portable printer.

### SUMMARY OF THE INVENTION

In recent years, portable information terminals such as smartphones have been widely used, and it is desirable that printing be performed using a portable information terminal just as using other information terminals. Because such information terminals are characterized by their portability, printing apparatuses to connect to information terminals as well are preferably small with high portability.

Therefore, there is a demand for small, easy-to-carry printing apparatuses connectable to portable information terminals.

Aspects of the present invention are set out in the appended claims.

According to an aspect of the present invention, a small, easy-to-carry printing apparatus connectable to information terminals is provided.

### BRIEF DESCRIPTION OF THE DRAWINGS

FIG. 1 is a perspective view of a printing apparatus according to an embodiment;
FIG. 2 is another perspective view of the printing apparatus according to the embodiment;
FIG. 3 is a bottom view of the printing apparatus according to the embodiment;
FIG. 4 is a side view of the printing apparatus according to the embodiment;
FIG. 5 is an exploded perspective view of the printing apparatus according to the embodiment;
FIG. 6 is another exploded perspective view of the printing apparatus according to the embodiment;
FIG. 7 is a perspective view of a printer according to an embodiment not covered by the claimed invention;
FIG. 8 is a cross-sectional view of the printer according to the embodiment not covered by the claimed invention;
FIG. 9 is a perspective view of a baseplate according to an embodiment not covered by the claimed invention;
FIG. 10 is another perspective view of the baseplate according to the embodiment not covered by the claimed invention;
FIG. 11 is a perspective view of a cassette according to an embodiment not covered by the claimed invention;
FIG. 12 is a side view of the cassette according to the embodiment not covered by the claimed invention;
FIG. 13 is an exploded perspective view of the cassette according to the embodiment not covered by the claimed invention;
FIG. 14 is a perspective view of an upper case of the cassette according to the embodiment not covered by the claimed invention;
FIG. 15 is a cross-sectional view of the cassette according to the embodiment not covered by the claimed invention;
FIG. 16 is a diagram illustrating the cassette according to the embodiment not covered by the claimed invention;
FIG. 17 is a perspective view of the baseplate, and a jacket and the cassette that are attached to the baseplate;
FIG. 18 is another perspective view of the baseplate, and the jacket and the cassette that are attached to the baseplate;
FIG. 19 is a diagram illustrating a printing method according to an embodiment not covered by the claimed invention;
FIG. 20 is a diagram illustrating the case of using a stack of cut sheets in the printing apparatus according to the embodiment;
FIG. 21 is a diagram illustrating the case of using the stack of cut sheets in the printing apparatus according to the embodiment;
FIG. 22 is a diagram illustrating the case of using the stack of cut sheets in the printing apparatus according to the embodiment;
FIG. 23 is a perspective view of a different type of cassette according to an embodiment not covered by the claimed invention; and
FIG. 24 is a diagram illustrating the different type of cassette according to an embodiment not covered by the claimed invention.

### DESCRIPTION OF THE EMBODIMENTS

One or more embodiments of the present invention are described below with reference to the accompanying drawings. In the following description, the same members or components are referred to using the same reference numeral, and a repeated description thereof may be omitted.

Furthermore, the embodiments are described using an XYZ coordinate system as defined as illustrated in the drawings. A direction along the X-axis is referred to as "X direction." A direction along the Y-axis is referred to as "Y direction." A direction along the Z-axis is referred to as "Z direction." The X direction, the Y direction, and the Z direction are perpendicular to one another. A plane including the X direction and the Y direction is referred to as "XY plane." A plane including the Y direction and the Z direction is referred to as "YZ plane." A plane including the Z direction and the X direction is referred to as "ZX plane."

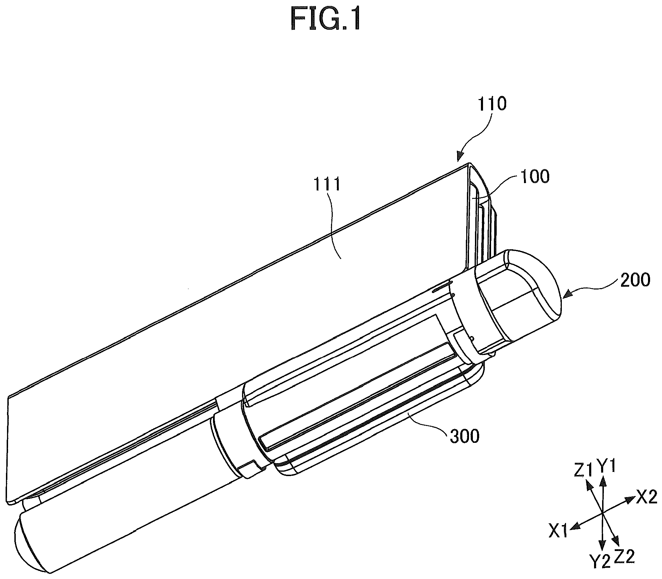

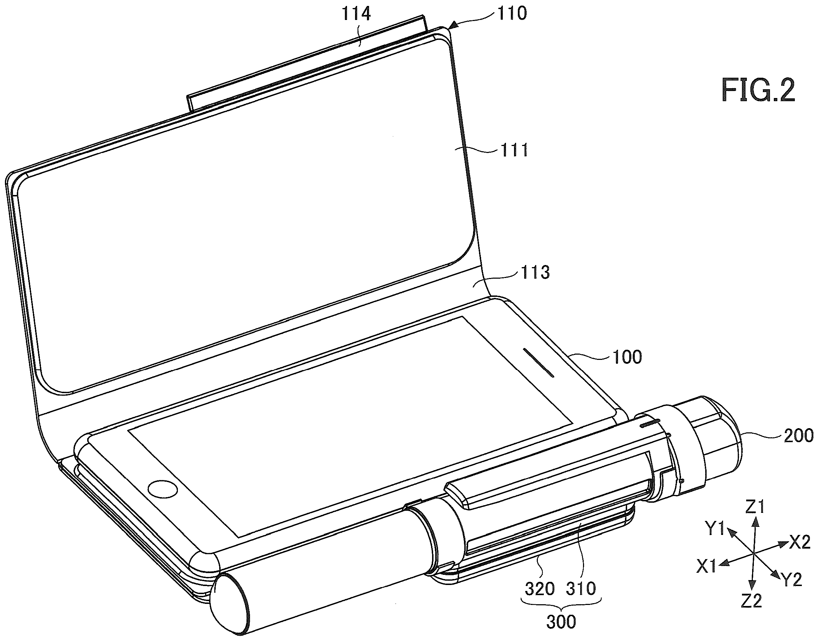

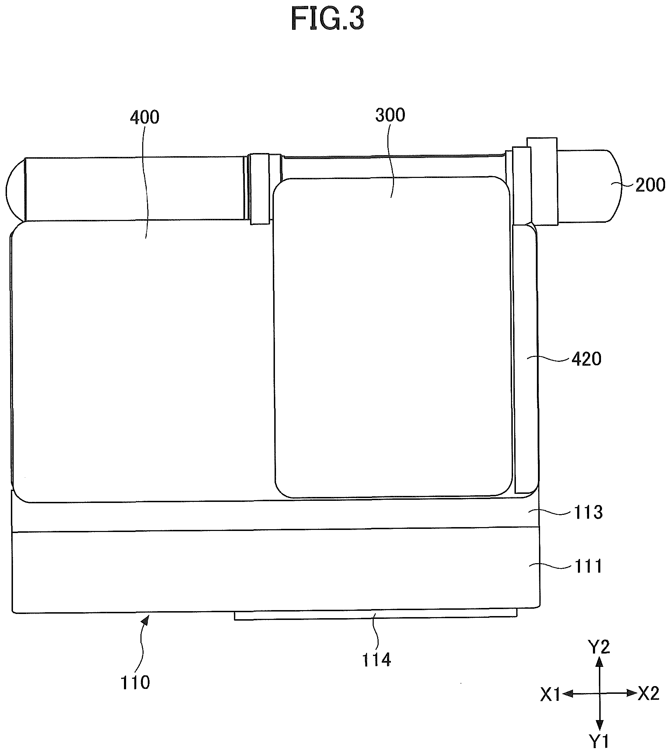

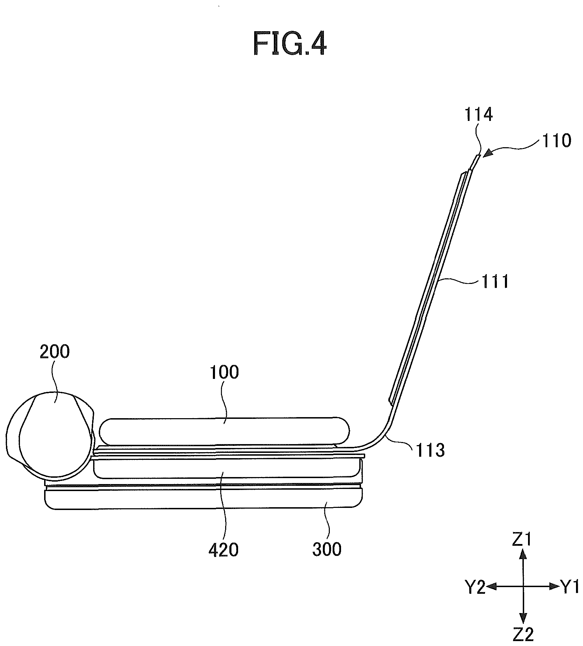

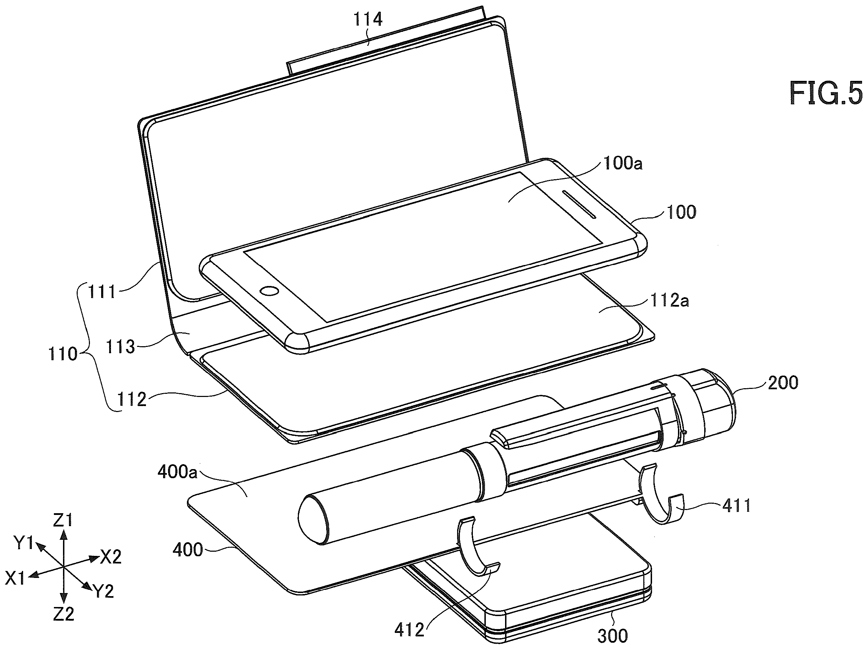

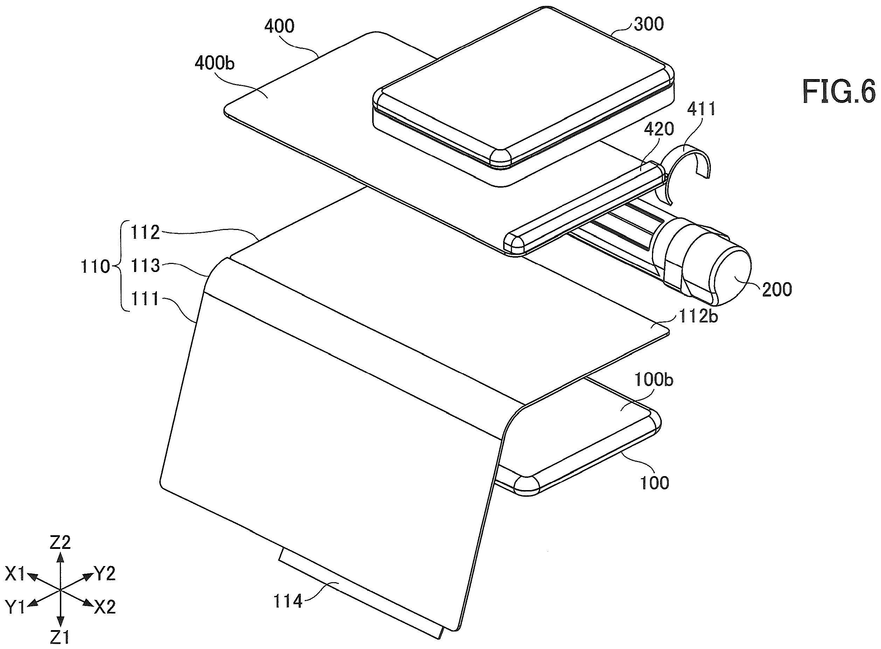

A printing apparatus according to an embodiment is described with reference to FIGS. 1 through 6. FIG. 1 is a perspective view of the printing apparatus of this embodiment. FIGS. 2, 3 and 4 are a perspective view, a bottom view, and a side view, respectively, of the printing apparatus with an upper cover of a jacket being open. FIGS. 5 and 6 are a top-side exploded perspective view and a bottom-side exploded perspective view, respectively, of the printing apparatus.

The printing apparatus of this embodiment prints information received from a portable information terminal 100 such as a smartphone on recording paper. The printing apparatus according to the main embodiment of the invention includes a smartphone jacket (hereinafter "jacket") 110, a pen-type printer 200, a cassette 300 that stores recording paper, and a baseplate 400. The cassette 300 is an example of a container that holds recording paper. The printing apparatus may use the printer 200 to print information received from other apparatuses using the information terminal 100.

The jacket 110 is formed of, for example, synthetic leather. The information terminal 100 has a slightly thick flat-plate shape, being longer in the X direction than in the Y direction to be substantially rectangular. The jacket 110 includes an upper cover 111 and a lower cover 112 that correspond in shape to the information terminal 100. The jacket 110 further includes a foldable part 113 that is elongated in the X direction at the Y1-side edge of the jacket 110 to connect the upper cover 111 and the lower cover 112.

When the information terminal 100 is attached to the jacket 110, the information terminal 100 is held between the upper cover 111 and the lower cover 112. Specifically, a back surface 100b of the information terminal 100 is placed on an inside surface 112a of the lower cover 112, and the jacket 110 is folded at the foldable part 113 to close the upper cover 111, so that a front surface 100a of the information terminal 100 is covered with the upper cover 111 and the back surface 100b is covered with the lower cover 112.

A magnetic part 114 containing a magnet is provided on the upper cover 111 on the side opposite from the side on which the upper cover 111 connects to the foldable part 113. The printing apparatus further includes clips 411 and 412 that hold the printer 200. Part of the clips 411 and 412 contains a magnetic material and is attracted to the magnet by its magnetic force. The information terminal 100 can be kept covered with the upper cover 111 by using the magnet.

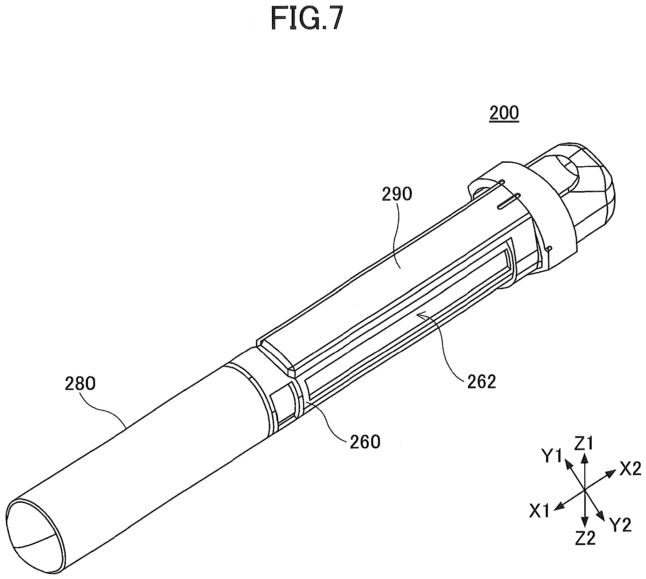

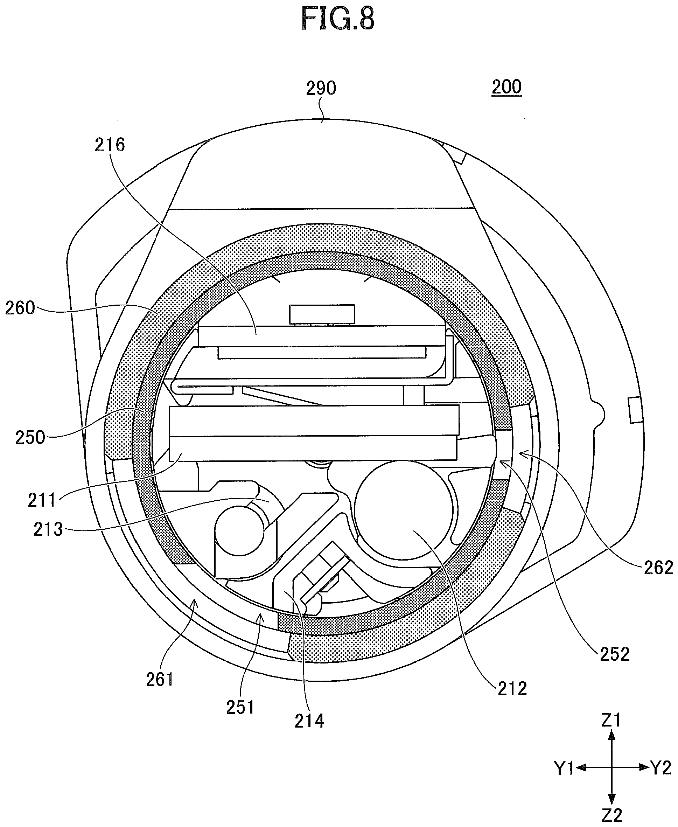

The printer 200 is described with reference to FIGS. 7 and 8. FIGS. 7 and 8 are a perspective view and a cross-sectional view, respectively, of the printer 200. The printer 200, which has a cylindrical appearance, is an Internet of Things (IoT) apparatus including a printing function and a radio communication function.

The printer 200 includes a print head 211 such as a thermal head, a platen roller 212, a feed roller 213, a paper guide 214, a spring, a control board 216, an inner cover 250, and an outer cover 260. The print head 211 is pressed against the platen roller 212 by the spring. Recording paper is fed by the feed roller 213, which is slightly adhesive, to move into the printer 200 along the paper guide 214. The recording paper is conveyed by the platen roller 212 while being held between the print head 211 and the platen roller 212, and is thereafter discharged. An electronic circuit and electronic components that control the printer 200 are mounted on the control board 216.

The inner cover 250 and the outer cover 260 are cylindrical, and the inner cover 250 is accommodated in the outer cover 260. The inner cover 250 includes an insert opening 251 and a discharge opening 252 that are open along the generatrix of the inner cover 250. The outer cover 260 includes an insert opening 261 and a discharge opening 262 that are open along the generatrix of the outer cover 260. The outer cover 260 is rotatable relative to the inner cover 250. When the printer 200 performs printing, the insert opening 251 and the insert opening 261 are aligned to be open, and the discharge opening 252 and the discharge opening 262 are aligned to be open. Recording paper enters the printer 200 through the insert openings 251 and 261 that are thus open, and is discharged through the discharge openings 252 and 262 that are thus open.

According to the printer 200, the cassette 300 storing recording paper can be connected to the insert opening 261 with the insert openings 251 and 261 being open to allow printing to be performed. Print data are transmitted from the information terminal 100 to the printer 200 through radio communications using, for example, Bluetooth Low Energy (BLE). The printer 200 receives the print data from an antenna and performs printing on recording paper.

A power supply 280 storing a lithium-ion battery, which is a rechargeable battery, is provided in the housing of the printer 200. The printer 200 can be driven with electric power supplied from the lithium-ion battery.

The printer 200, which is approximately 18 mm in diameter and approximately 165 mm in length, is small and can be carried around without feeling stress. The printer 200 includes a hook 290 which allows the printer 200 to be put in the chest pocket of clothes just like a pen to be carried around.

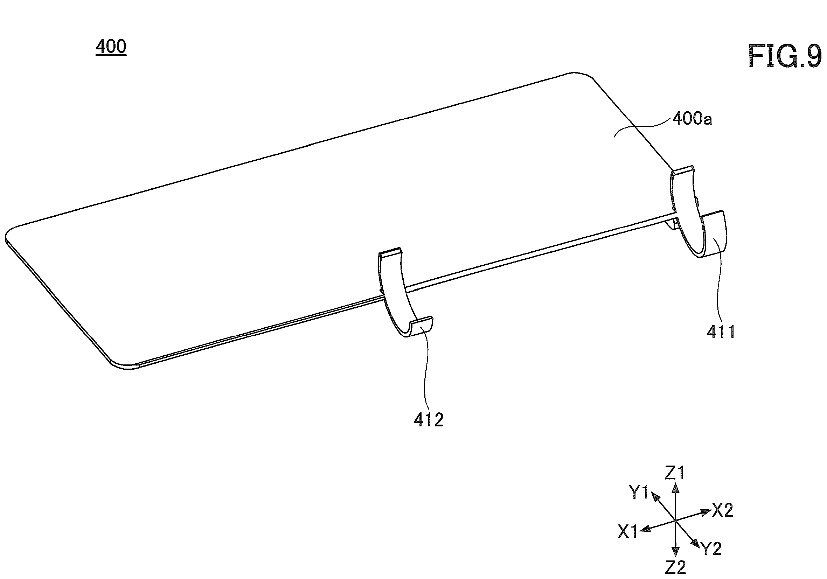

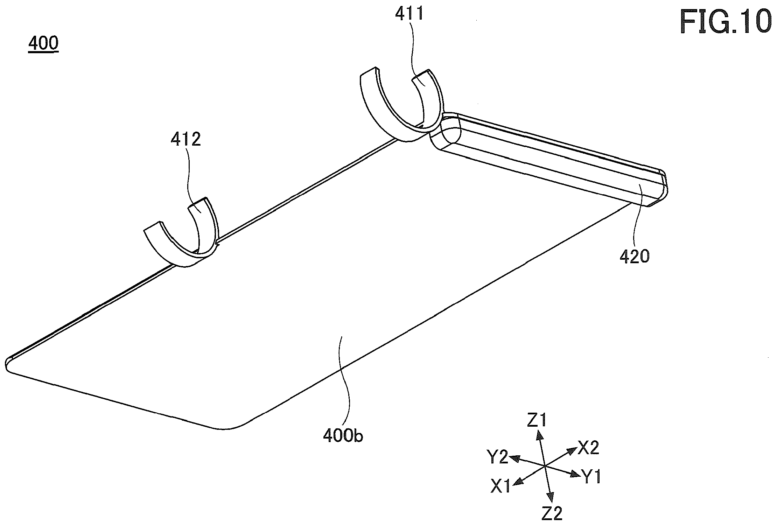

The baseplate 400 is described with reference to FIGS. 9 and 10. FIGS. 9 and 10 are a top-side perspective view and a bottom-side perspective view, respectively, of the baseplate 400.

The baseplate 400 is formed of, for example, a resin material. The baseplate 400 corresponds in shape to the information terminal 100 and the lower cover 112 to be longer in the X direction than in the Y direction to have a substantially rectangular flat-plate shape. The clips 411 and 412 for attaching the printer 200 are provided at the Y2-side edge of the baseplate 400 that is elongated along the X direction. The clips 411 and 412 have an open ring shape to allow entry of the printer 200. When the printer 200 is attached to and held by the clips 411 and 412, the longitudinal direction of the printer 200 coincides with the X direction, and recording paper is discharged in the Y2 direction.

Referring back to FIGS. 5 and 6, the lower cover 112 is attached to a Zl-side surface 400a of the baseplate 400, and the cassette 300 is attached to a Z2-side surface 400b of the baseplate 400. Furthermore, a weight 420 for keeping balance is provided on the surface 400b near the X2-side end.

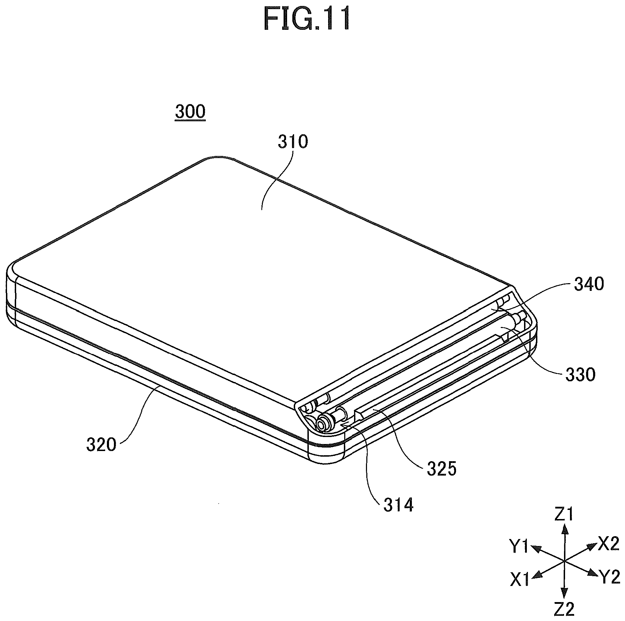

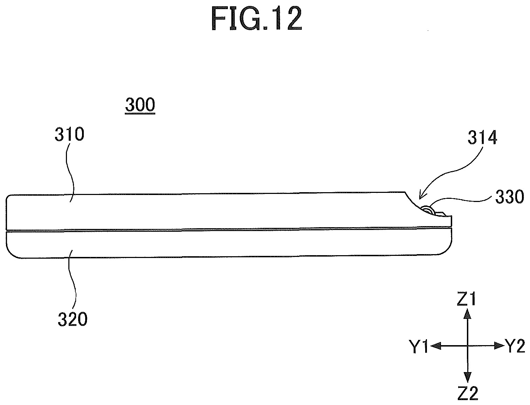

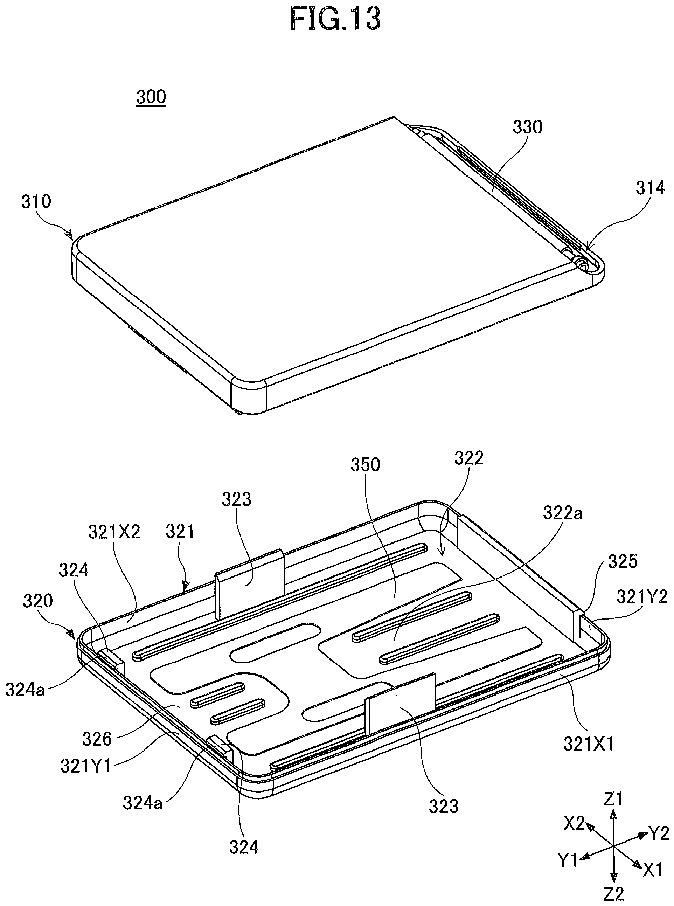

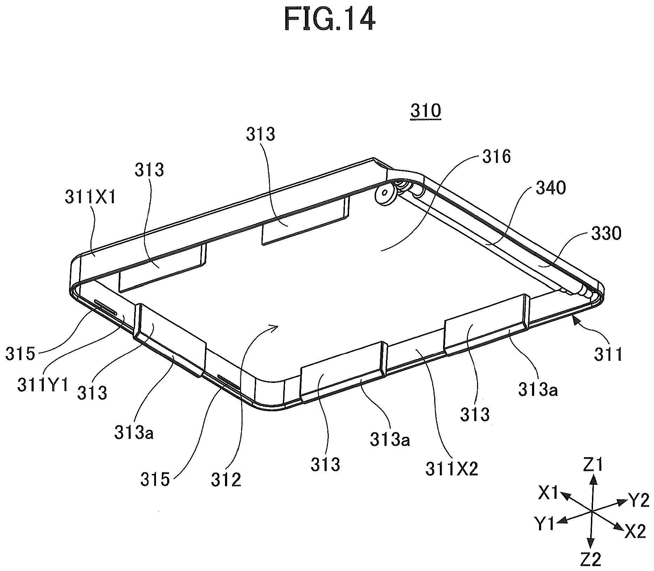

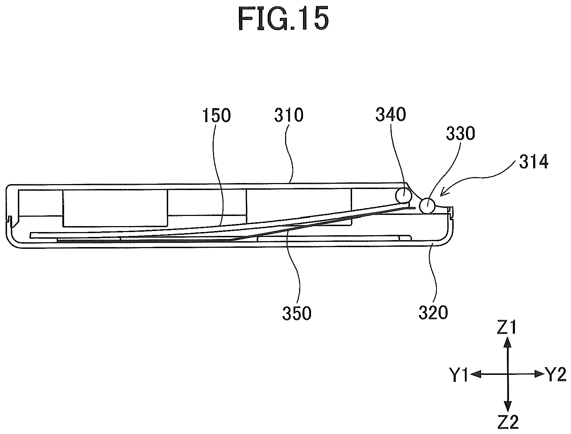

The cassette 300 is described with reference to FIGS. 11 through 15. FIGS. 11, 12 and 13 are a top-side perspective view, a side view and an exploded perspective view, respectively, of the cassette 300. FIG. 14 is a bottom-side perspective view of an upper case of the cassette 300. FIG. 15 is a cross-sectional view of the cassette 300. According to this embodiment, recording paper includes label paper.

The cassette 300 includes an upper case 310, a lower case 320, a first conveying roller 330, and a second conveying roller 340. The cassette 300 is longer in the Y direction than in the X direction to be substantially rectangular. Therefore, the upper case 310 and the lower case 320 are longer in the Y direction than in the X direction.

The upper case 310 includes a top plate 316 and a sidewall 311. The sidewall 311 extends in the Z2 direction from the top plate 316 to define the periphery of the upper case 310, so that a recess 312 is formed inside the sidewall 311. The sidewall 311 includes an X1-side portion 311X1 elongated along the Y direction, an X2-side portion 311X2 elongated along the Y direction, and a Y1-side portion 311Y1 elongated along the X direction. Five paper guides ("guides") 313 are provided on the inner surface of the sidewall 311 to extend in the Z2 direction relative to the top plate 316. Specifically, two of the guides 313 are provided on the inner surface of the portion 311X1 to be arranged side by side along the Y direction, and two of the guides 313 are provided on the inner surface of the portion 311X2 to be arranged side by side along the Y direction. The guides 313 on the X1 side and the guides 313 on the X2 side face each other across the recess 312. Furthermore, the remaining one of the guides 313 is provided on the inner surface of the portion 311Y1.

A Z2-side end of each guide 313 is sloped outward to form a slope 313a. As described below, as the printing apparatus performs printing on recording paper 150, the stacked recording paper 150 is reduced to lower the printing apparatus in the Z2 direction. At this point, the slopes 313a prevent the printing apparatus from being displaced in the X direction or the Y direction to lose balance, thereby preventing the stacked recording paper 150 from collapsing. The slopes 313a gradually widen the space inside the sidewall 311 in the Z2 direction to allow easy entry of the recording paper 150 into the recess 312. Specifically, even when the Y1 and Y2-side edges and/or the X1 and X2-side edges of the recording paper 150 are not aligned so that the Y1 and Y2-side surfaces and/or the X1 and X2-side surfaces of the recording paper 150 are uneven, the slopes 313a cause the recording paper 150 to enter the recess 312 as the upper case 310 moves downward with the progress of printing. This prevents the printing apparatus from moving in the X direction or the Y direction to lose balance, thereby preventing the stacked recording paper 150 from collapsing.

The first conveying roller 330 and the second conveying roller 340 are provided on the upper case 310 on its Y2 side to be elongated in the X direction. Furthermore, an opening 314 for supplying the recording paper 150 to the printer 200 is formed in the upper case 310 near the first conveying roller 330 and the second conveying roller 340. In addition, two lock grooves 315 are provided one on each side of the guide 313 in the inner surface of the portion 311Y1 of the sidewall 311.

The lower case 320 includes a bottom plate 326 and a sidewall 321. The sidewall 321 extends in the Z1 direction from the bottom plate 326 to define the periphery of the lower case 320, so that a recess 322 is formed inside the sidewall 321. The sidewall 321 includes an X1-side portion 321X1 elongated along the Y direction, an X2-side portion 321X2 elongated along the Y direction, a Y1-side portion 321Y1 elongated along the X direction, and a Y2-side portion 321Y2 elongated along the X direction. Two guides 323 are provided on the inner surface of the sidewall 321 to extend in the Z1 direction relative to the bottom plate 326. Specifically, one of the guides 323 is provided on the inner surface of the portion 321X1, and the other of the guides 323 is provided on the inner surface of the portion 321X2. The guides 323 face each other across the recess 322. Furthermore, two guides 324 are provided on the inner surface of the portion 321Y1 to be arranged side by side along the X direction. Each guide 324 includes a lock claw 324a near its Zl-side end. A lock claw 325 is provided on the inner surface of the portion 321Y2 to be elongated along the X direction.

The upper case 310 and the lower case 320 are connected with the recess 312 and the recess 322 facing each other. In this state, the lock claws 324a of the guides 324 enter the lock grooves 315 provided in the inner surface of the sidewall 311, and the lock claw 325 of the lower case 320 engages with the edge of the opening 314, so that the upper case 310 and the lower case 320 are kept connected. The recording paper 150 can be loaded in the space formed between the recesses 312 and 322.

A leaf spring 350 is provided at a bottom 322a of the recess 322 (namely, on the Zl-side surface of the bottom plate 326). As illustrated in FIG. 15, the leaf spring 350 lifts up the recording paper 150 in the Z1 direction to bring the recording paper 150 into contact with the second conveying roller 340. As a result, the recording paper 150 can be smoothly supplied even when the recording paper 150 stored in the cassette 300 runs short.

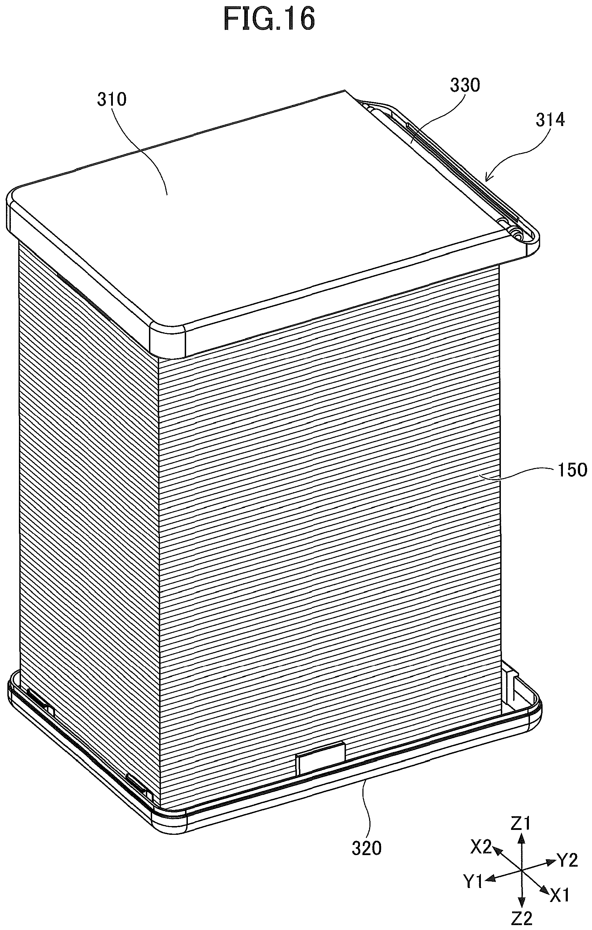

According to this embodiment, while the cassette 300 may be used with the upper case 310 and the lower case 320 connected, the upper case 310 and the lower case 320 may be separated to accommodate the recording paper 150 between the separated upper case 310 and lower case 320. As illustrated in FIG. 16, the stacked recording paper 150 may be loaded between the upper case 310 and the lower case 320 with the recesses 312 and 322 facing toward each other. FIG. 16 is a perspective view of the cassette 300 in the above-described state.

When the upper case 310 and the lower case 320 are connected, the recording paper 150 is loaded in the space between the upper case 310 and the lower case 320, and therefore, the number of sheets of the recording paper 150 that can be stored is limited. In contrast, when the upper case 310 and the lower case 320 are separated, a large number of sheets of the recording paper 150 can be loaded between the upper case 310 and the lower case 320. Therefore, it is possible to address the case where the recording paper 150 is large in volume. The size of the recording paper 150 used in this embodiment is, for example, A8 (52 mm × 74 mm).

According to this embodiment, a cut sheet is used as recording paper. If rolled paper is to be used, the rolled paper is required to be smaller in radius as the printing apparatus becomes smaller in size. When small-radius rolled paper is used, however, the paper remains tightly curled after printing and is difficult to handle. This phenomenon becomes more conspicuous as the printing apparatus becomes smaller in size. Therefore, a cut sheet which does not curl after printing is used as recording paper in this embodiment. It is of course possible to use rolled paper in the printing apparatus according to this embodiment.

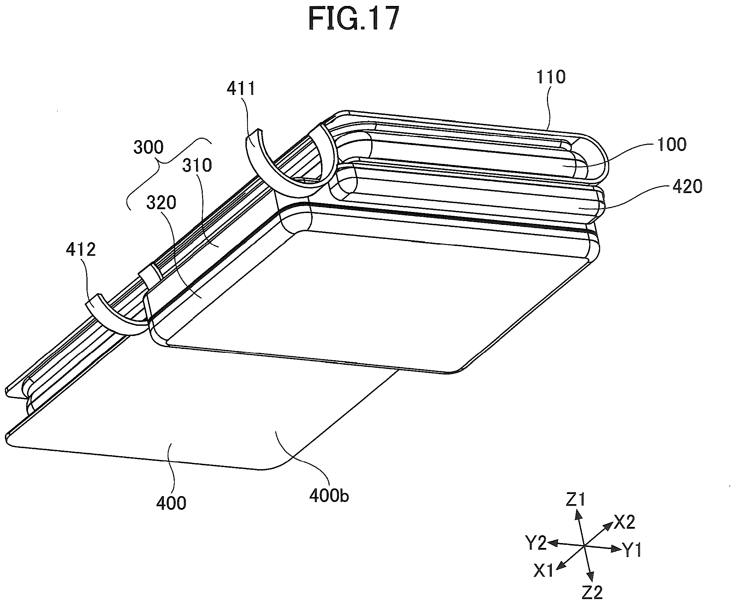

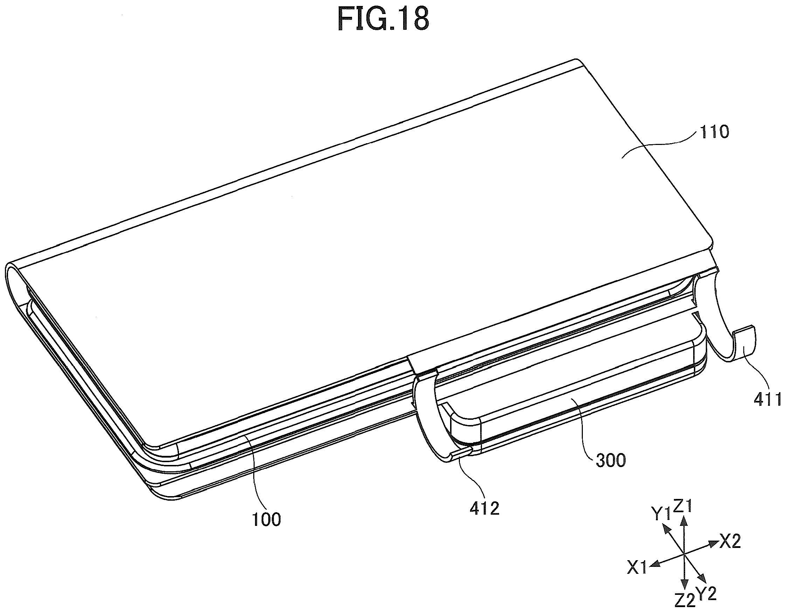

The jacket 110 and the cassette 300 that are connected to each other are described with reference to FIGS. 17 and 18. FIGS. 17 and 18 are a bottom-side perspective view and a top-side perspective view, respectively, of the jacket 110 and the cassette 300 that are connected to each other. In FIGS. 17 and 18, the opening 314 of the cassette 300 is closed by a lid to prevent entry of dust or the like through the opening 314 during the carrying of the printing apparatus.

According to this embodiment, as described with reference to FIG. 6, an outside surface 112b of the lower cover 112 is attached to the surface 400a of the baseplate 400, and an outside surface of the upper case 310 is attached to the surface 400b.

The baseplate 400, the jacket 110, and the cassette 300 may be separable from one another. Alternatively, the baseplate 400 and the jacket 110 may be integrally formed or the baseplate 400 and the upper case 310 may be integrally formed. As yet another alternative, the baseplate 400, the jacket 110, and the upper case 310 of the cassette 300 may be integrally formed.

A battery for driving the printer 200 may be provided on part of the surface 400b of the baseplate 400 on the X1 side where the cassette 300 is not attached. In this case, the power supply 280 may be removed from the printer 200, and the printer 200 may be connected to the battery attached to the baseplate 400.

According to this embodiment, by placing the printer 200 into the clips 411 and 412 as illustrated in FIGS. 17 and 18, the printing apparatus illustrated in FIGS. 1 through 4 is achieved. At this point, part of the printer 200 enters the opening 314 of the cassette 300 to connect the opening 314 to the insert opening 251.

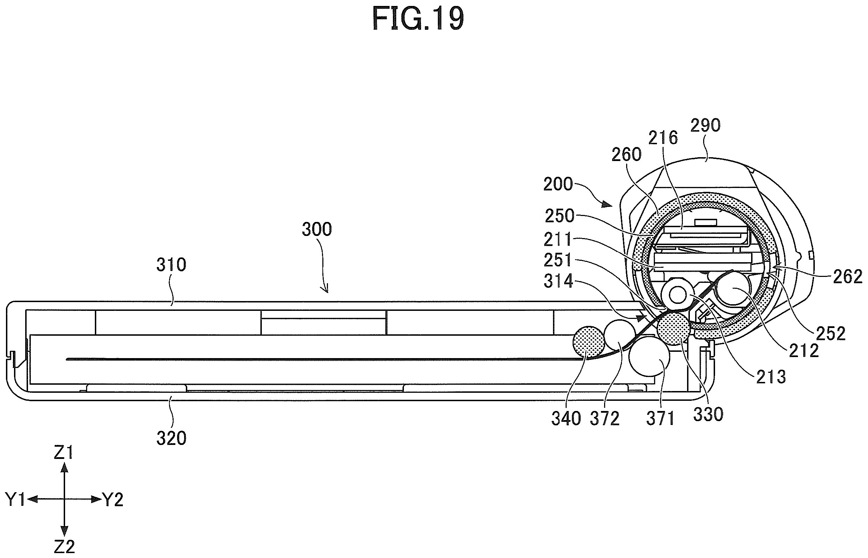

Printing by the printing apparatus is described with reference to FIG. 19. FIG. 19 illustrates the printer 200 and the cassette 300 that are connected. For convenience of description, the upper case 310 and the lower case 320 that are connected are depicted, and the jacket 110 and the baseplate 400 are omitted in FIG. 19.

When the opening 314 of the cassette 300 communicates with the insert opening 251 of the printer 200 with the printer 200 being placed in the clips 411 and 412, the feed roller 213 contacts the first conveying roller 330. The first conveying roller 330 is rotated by the rotation of the feed roller 213. The cassette 300 includes a first gear 371 and a second gear 372 that rotate the second conveying roller 340 with the rotation of the first conveying roller 330. The first gear 371 is connected to the first conveying roller 330, the second gear 372 is connected to the first gear 371, and the second conveying roller 340 is connected to the second gear 372. For convenience of illustration, the teeth of the first gear 371 and the second gear 372 are omitted in FIG. 19.

When the printer 200 performs printing, the feed roller 213 rotates counterclockwise in FIG. 19 to convey recording paper toward the print head 211. When the feed roller 213 rotates counterclockwise, the first conveying roller 330 contacting the feed roller 213 rotates clockwise, and the rotation of the first conveying roller 330 is transmitted to the second conveying roller 340 via the first gear 371 and the second gear 372. When the first conveying roller 330 rotates clockwise, the second conveying roller 340 rotates counterclockwise.

The second conveying roller 340 is in contact with a surface of the top sheet. As the second conveying roller 340 rotates counterclockwise, the recording paper moves in the Y2 direction to be conveyed toward the printer 200, and passes through the opening 314 and the insert opening 251 to be conveyed toward the print head 211, being held between the feed roller 213 and the first conveying roller 330. The first conveying roller 330 and the second conveying roller 340 have a one-way clutch function.

To perform printing in the printing apparatus, the upper cover 111 is opened, and the touchscreen of the information terminal 100 is operated to input instructions for printing to the information terminal 100. By inputting instructions through operations on the touchscreen, print information stored in a memory of the information terminal 100 and a print command signal are transmitted to the printing apparatus by communications using, for example, BLE, and printing is performed based on this information.

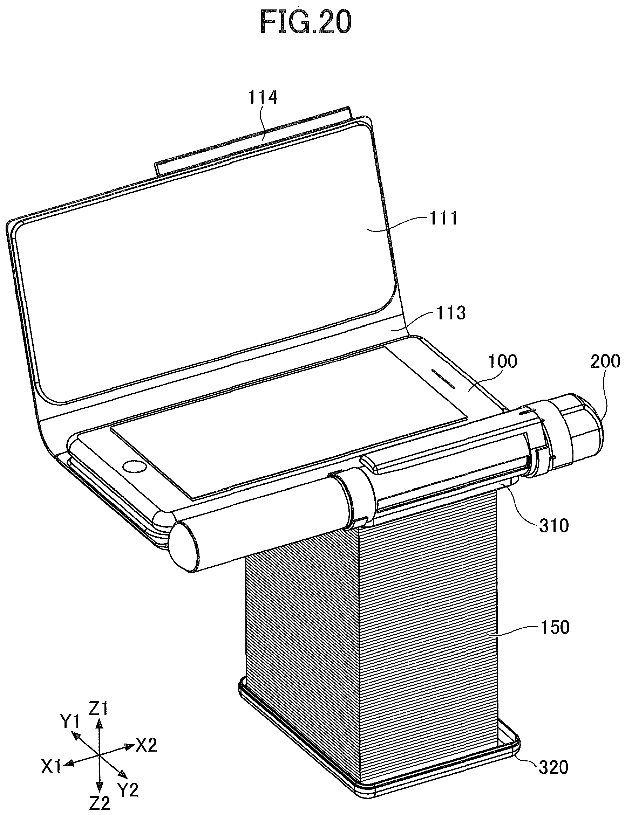

A method of using a printing apparatus according to this embodiment is described with reference to FIG. 20. According to this embodiment, with the upper case 310 and the lower case 320 of the cassette 300 being separated to have the recess 312 and the recess 322 facing each other, the stacked recording paper 150 is loaded between the upper case 310 and the lower case 320. By loading the recording paper 150 in this manner, a large number of sheets, for example, 100 through 300 sheets, of the recording paper 150 can be loaded in the cassette 300 irrespective of the size of the cassette 300, so that it is possible to address the case where it is desired to perform printing on a large number of sheets of recording paper. By separating the upper case 310 and the lower case 320, a virtual stack holder (VSH) that has no sidewalls on the side surfaces of the stacked recording paper 150 is formed. The printing apparatus can be carried around with the upper case 310 and the lower case 320 being connected.

According to this embodiment, the weight 420 serving as an adjuster to adjust the center of gravity of the printing apparatus is provided on the baseplate 400 near its X2-side end in order for the printing apparatus to maintain the posture as illustrated in FIG. 20 without losing balance even when the stacked recording paper 150 is high as illustrated in FIG. 20. The weight and the installation position of the weight 420 are adjusted so that the center of gravity of the printing apparatus coincides with the center of the paper plane of the recording paper 150. The provision of the weight 420 prevents the printing apparatus from losing balance and prevents the stacked recording paper 150 from collapsing even when a large number of sheets of the recording paper 150 are loaded between the upper case 310 and the lower case 320. The weight 420 is attached so that the center of gravity of a structure formed of the baseplate 400; the printer 200, the jacket 110, and the upper case 310 of the cassette 300 attached to the baseplate 400; and the information terminal 100 held on the jacket 110 coincides with the center of the paper plane of the recording paper 150. Without the weight 420, the information terminal 100 in the posture of FIG. 20 is lighter on its head side (the X2 side) in its longitudinal direction. Therefore, the weight 420 is attached to the Z2-side surface 400b of the baseplate 400 on the X2 side to offset turning moment. In the width direction of the recording paper 150, the information terminal 100 is uniform in weight, and therefore, the balance is maintained using the jacket 110, the printer 200, and the upper case 310.

When the printing apparatus is thus placed on the recording paper 150, the weight of the printing apparatus is added to the stacked recording paper 150, and the top sheet of the recording paper 150 is therefore in contact with the second conveying roller 340.

When the second conveying roller 340 rotates, the top sheet is conveyed in the Y2 direction toward the insert opening 251. To prevent the second top and subsequent sheets of the recording paper 150 from being conveyed together with the top sheet, the upper case 310 may include an engaging part that holds the leading edges of the second top and subsequent sheets when the second conveying roller 340 rotates to convey the top sheet in the Y2 direction.

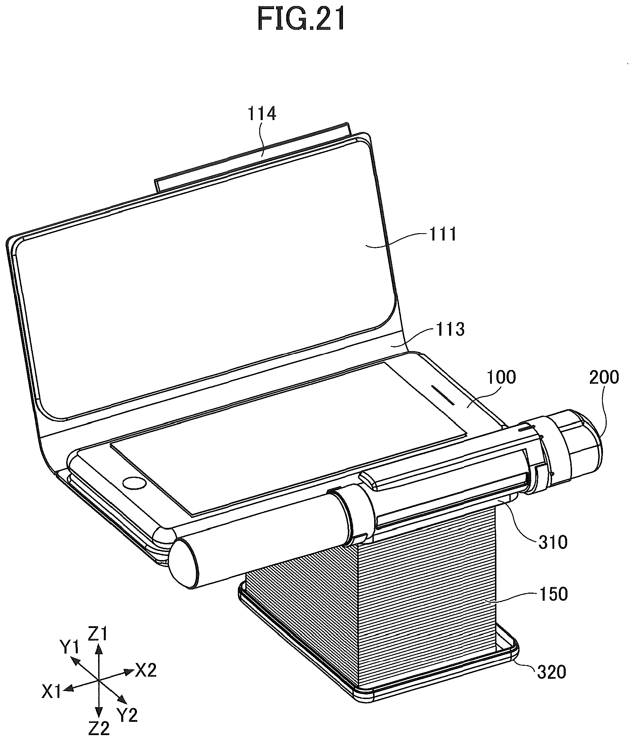

As the printing apparatus performs printing on the recording paper 150, the height of the stacked recording paper 150 is gradually reduced as illustrated in FIG. 21. As the printing further progresses, the upper case 310 and the lower case 320 are connected as illustrated in FIG. 2. In this state, the recording paper 150 is pushed upward in the Z1 direction by the leaf spring 350 as illustrated in FIG. 15. Therefore, the surface of the top sheet is kept in contact with the second conveying roller 340.

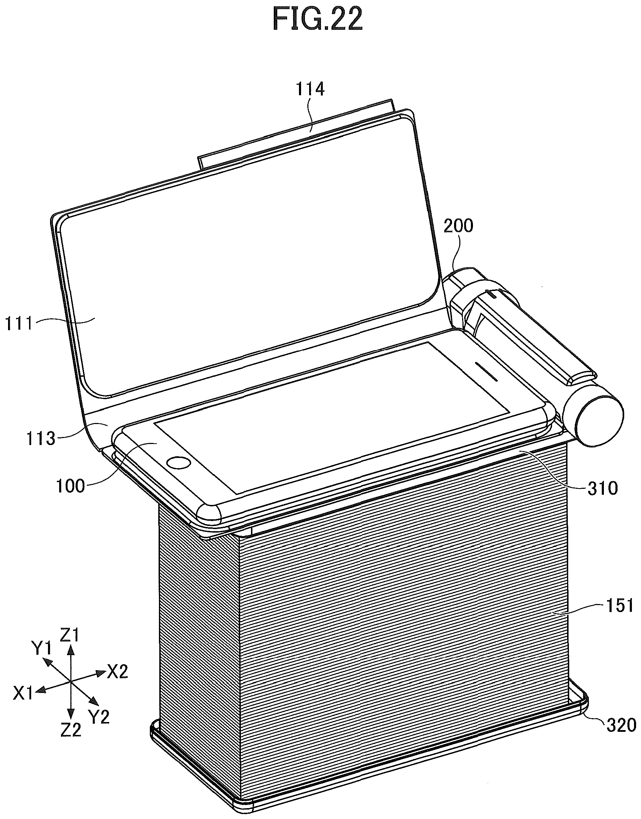

As illustrated in FIG. 22, the printing apparatus can perform printing on long-size recording paper 151. FIG. 22 is a perspective view of an arrangement for perform printing on the recording paper 151.

In the arrangement illustrated in FIG. 22, the recording paper 151 is set to be elongated in the X direction, and the printer 200 is installed at the X2-side end of the baseplate 400. In FIG. 22, the power supply 280 is removed from the printer 200. A clip is provided at the X2-side edge of the baseplate 400 instead of the clips 411 and 412. The printer 200 is installed to be elongated in the Y direction, and the recording paper 151 is discharged in the X2 direction. In this case, a power supply for the printer 200 may be provided on the surface 400b of the baseplate 400 near its X1-side end.

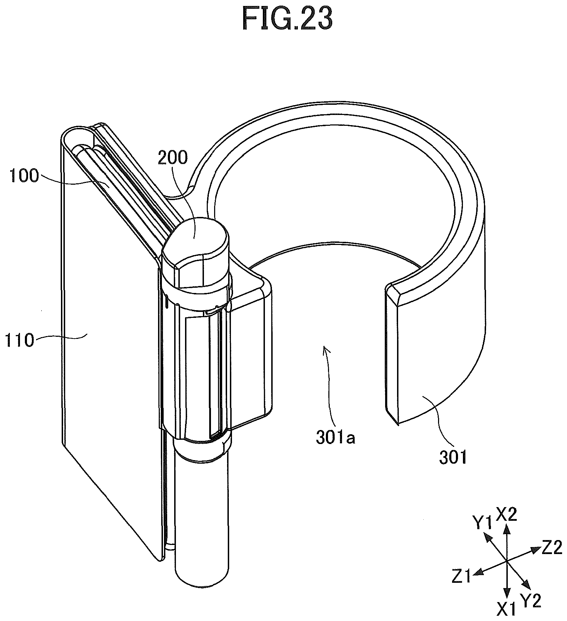

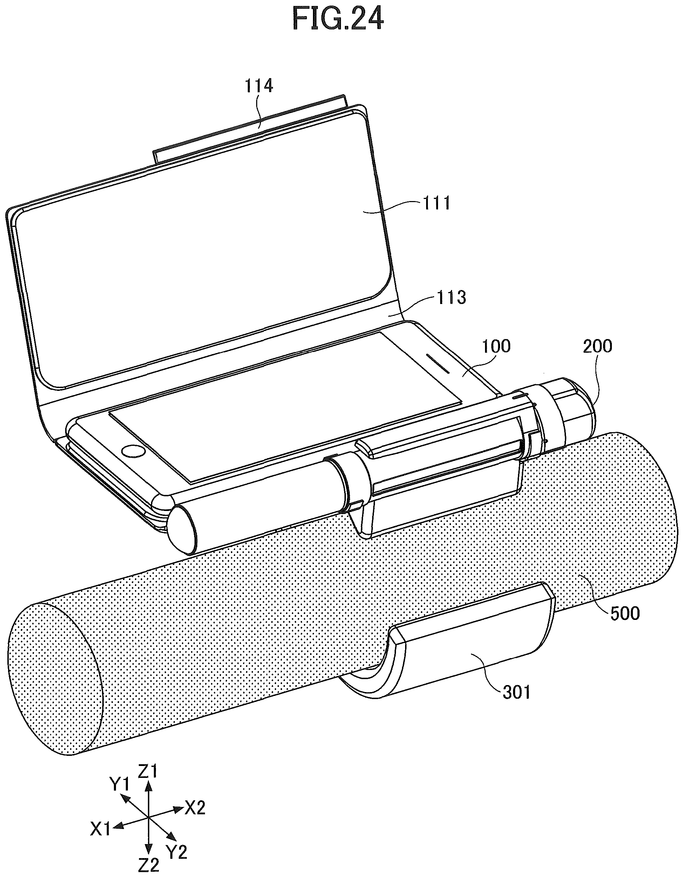

According to this embodiment, a clip-on cassette 301 having a cylindrical shape as illustrated in FIG. 23 may be used instead of the cassette 300. The cassette 301 includes a clip that forms an opening 301a. The clip is an arm clip that may be attached to an arm and the like. Recording paper may be loaded in the cassette 301. By inserting a cylindrical support 500 for supporting the printing apparatus into the opening 301a, the cassette 301 can be freely attached to the support 500 as illustrated in FIG. 24 to increase latitude in work such as printing.

In the case of long recording paper having a length of 150 mm, the cassette 301 can accommodate approximately 20 to 30 sheets. Because a cylindrical portion of the cassette 301 has a large radius, recording paper hardly curls. The cassette 301 can also accommodate short sheets having a smaller length instead of long sheets. In this case, the cassette 301 can accommodate approximately 100 to approximately 150 short sheets.

According to such a printing apparatus as well, information from the information terminal 100 can be printed on recording paper and output based on operations on the touchscreen of the information terminal 100.

The scope of the invention is defined in the appended claims.

## Claims

1. A printing apparatus comprising:
a printer (200) configured to perform printing on a recording sheet;
a baseplate (400) that is longer in an X direction than in a Y direction so as to have a substantially rectangular shape, and that holds the printer (200) detachably attached to the baseplate (400);
a jacket (110) attached to a first surface (400a) of the baseplate (400), the jacket (110) including an upper cover (111), a lower cover (112), and a foldable part (113) to connect the upper cover (111) and the lower cover (112), the foldable part (113) being elongated in the X direction at a Y direction side edge of the baseplate (400), and the jacket (110) being configured to hold an information terminal (100) between the upper cover (111) and the lower cover (112) so that a front surface (100a) of the information terminal (100) is covered with the upper cover (111) and the back surface (100b) is covered with the lower cover (112);
a container (300) attached to a second surface (400b) of the baseplate (400) facing away from the first surface (400a), and configured to store the recording sheet; and
a clip (411, 412) provided on the baseplate (400), and configured to hold the printer (200),
wherein the printer (200) is placed in the clip (411, 412) to be elongated along the baseplate (400).

2. The printing apparatus as claimed in claim 1, wherein
the printer (200) includes a feed roller (213) configured to feed the recording sheet, and
the container (300) includes
a first conveying roller (330) configured to rotate in contact with the feed roller (213); and
a second conveying roller (340) configured to rotate with a rotation of the first conveying roller (330) and to contact a surface of the recording sheet stored in the container (300).

3. The printing apparatus as claimed in claim 1 or 2, wherein
the container (300) includes a first case (310) and a second case (320) that are separable from each other, and
the container (300) is configured to store a stack of recording sheets between the first case (310) and the second case (320).

4. The printing apparatus as claimed in claim 3, further comprising:
a weight (420) provided on the baseplate (400), and configured to adjust a center of gravity of the printing apparatus.

5. The printing apparatus as claimed in claim 3 or 4, wherein the container (300) further includes a spring (350) provided in the second case (320), the spring (350) being configured to urge the recording sheet toward the first case (310).

6. The printing apparatus as claimed in any of claims 3 to 5, wherein the baseplate (400) and the first case (310) are integrally formed.

## Patentansprüche

1. Druckvorrichtung, aufweisend:
einen Drucker (200), der dazu eingerichtet ist, Drucken auf einem Aufzeichnungspapier durchzuführen;
eine Grundplatte (400), die länger in einer X-Richtung als in einer Y-Richtung ist, sodass die Grundplatte (400) eine im Wesentlichen rechteckige Form aufweist, wobei der Drucker (200) lösbar an der Grundplatte (400) angebracht ist;
eine Ummantelung (110), die an einer ersten Fläche (400a) der Grundplatte (400) angebracht ist, wobei die Ummantelung (110) eine obere Abdeckung (111), eine untere Abdeckung (112) und ein faltbares Element (113), welches die obere Abdeckung (111) und die untere Abdeckung (112) verbindet, aufweist, wobei das faltbare Element (113) länglich in der X-Richtung an einem Y-Richtung-Seitenrand der Grundplatte (400) ausgebildet ist, wobei die Ummantelung (110) dazu eingerichtet ist, ein Informationsterminal (100) zwischen der oberen Abdeckung (111) und der unteren Abdeckung (112) derartig zu halten, dass eine vordere Fläche (100a) des Informationsterminals (100) mit der oberen Abdeckung (111) abgedeckt ist und eine hintere Fläche (100b) mit der unteren Abdeckung (112) abgedeckt ist;
einen Behälter (300), der an einer zweiten Fläche (400b) der Grundplatte (400) angebracht ist, die von der ersten Fläche (400a) abgewandt ist, wobei der Behälter (300) dazu eingerichtet ist, das Aufzeichnungspapier aufzubewahren; und
einen Clip (411, 412), der an der Grundplatte (400) vorgesehen ist und dazu eingerichtet ist, den Drucker (200) zu halten,
wobei der Drucker (200) in den Clip (411, 412) platziert ist, um länglich entlang der Grundplatte (400) ausgebildet zu sein.

2. Druckvorrichtung gemäß Anspruch 1, wobei
der Drucker (200) eine Zuführrolle (213) aufweist, die dazu eingerichtet ist, das Aufzeichnungspapier zuzuführen, und
der Behälter (300) aufweist
eine erste Förderrolle (330), dazu eingerichtet, in Berührung mit der Zuführrolle (213) zu rotieren; und
eine zweite Förderrolle (340), dazu eingerichtet, mit einer Rotation der ersten Förderrolle (330) zu rotieren und ferner eine Fläche des in dem Behälter (300) aufbewahrten Aufzeichnungspapiers zu berühren.

3. Druckvorrichtung gemäß Anspruch 1 oder 2, wobei
der Behälter (300) ein erstes Gehäuse (310) und ein zweites Gehäuse (320) aufweist, die voneinander trennbar sind, und
der Behälter (300) dazu eingerichtet ist, einen Stapel von Aufzeichnungspapieren zwischen dem ersten Gehäuse (310) und dem zweiten Gehäuse (320) aufzubewahren.

4. Druckvorrichtung gemäß Anspruch 3, ferner aufweisend:
ein Gewicht (420), das auf der Grundplatte (400) vorgesehen ist und dazu eingerichtet ist, einen Schwerpunkt der Druckvorrichtung anzupassen.

5. Druckvorrichtung gemäß Anspruch 3 oder 4, wobei der Behälter (300) ferner eine Feder (350) aufweist, die in dem zweiten Gehäuse (320) vorgesehen ist, wobei die Feder (350) dazu eingerichtet ist, das Aufzeichnungspapier in Richtung des ersten Gehäuses (310) zu drücken.

6. Druckvorrichtung gemäß einem der Ansprüche 3 bis 5, wobei die Grundplatte (400) und das erste Gehäuse (310) integral ausgebildet sind.

## Revendications

1. Appareil d'impression comprenant :
une imprimante (200) configurée pour réaliser l'impression sur une feuille d'enregistrement ;
une plaque de base (400) qui est plus longue dans une direction X que dans une direction Y afin d'avoir une forme sensiblement rectangulaire, et qui maintient l'imprimante (200) fixée, de manière détachable, sur la plaque de base (400) ;
une chemise (110) fixée à une première surface (400a) de la plaque de base (400), la chemise (110) comprenant un couvercle supérieur (111), un couvercle inférieur (112) et une partie pliable (113) pour raccorder le couvercle supérieur (111) et le couvercle inférieur (112), la partie pliable (113) étant allongée dans la direction X au niveau d'un côté du côté de la direction Y de la plaque de base (400), et la chemise (110) étant configurée pour supporter un terminal d'information (100) entre le couvercle supérieur (111) et le couvercle inférieur (112) de sorte qu'une surface avant (100a) du terminal d'information (100) est recouverte avec le couvercle supérieur (111) et la surface arrière (100b) est recouverte avec le couvercle inférieur (112) ;
un contenant (300) fixé à une seconde surface (400b) de la plaque de base (400) orientée à l'opposé de la première surface (400a) et configuré pour stocker la feuille d'enregistrement ; et
une attache (411, 412) prévue sur la plaque de base (400) et configurée pour supporter l'imprimante (200),
dans lequel l'imprimante (200) est placée dans l'attache (411, 412) pour être allongée le long de la plaque de base (400).

2. Appareil d'impression selon la revendication 1, dans lequel :
l'imprimante (200) comprend un rouleau d'alimentation (213) configuré pour alimenter la feuille d'enregistrement, et
le contenant (300) comprend :
un premier rouleau de transport (330) configuré pour tourner en contact avec le rouleau d'alimentation (213) ; et
un second rouleau de transport (340) configuré pour tourner avec une rotation du premier rouleau de transport (330) et pour être en contact avec une surface de la feuille d'enregistrement stockée dans le contenant (300).

3. Appareil d'impression selon la revendication 1 ou 2, dans lequel :
le contenant (300) comprend un premier boîtier (310) et un second boîtier (320) qui peuvent être séparés l'un de l'autre, et
le contenant (300) est configuré pour stocker une pile de feuilles d'enregistrement entre le premier boîtier (310) et le second boîtier (320).

4. Appareil d'impression selon la revendication 3, comprenant en outre :
un poids (420) prévu sur la plaque de base (400) et configuré pour ajuster un centre de gravité de l'appareil d'impression.

5. Appareil d'impression selon la revendication 3 ou 4, dans lequel le contenant (300) comprend en outre un ressort (350) prévu dans le second boîtier (320), le ressort (350) étant configuré pour pousser la feuille d'enregistrement vers le premier boîtier (310).

6. Appareil d'impression selon l'une quelconque des revendications 3 à 5, dans lequel la plaque de base (400) et le premier boîtier (310) sont formés de manière solidaire.
